# EUROPEAN PATENT SPECIFICATION

(11) **EP 1 575 730 B1**
(45) Date of publication and mention of the grant of the patent: **02.12.2009**
(21) Application number: 03750754.8
(22) Date of filing: 08.10.2003
(51) Int. Cl.: B23D 53/00, F16L 59/00

(54) **SUPPLYING A WINDING APPARATUS WITH MINERAL WOOL MAT**
VERSORGUNG EINER WICKELVORRICHTUNG MIT EINER STEINWOLLMATTE
FOURNITURE D'UN MAT EN LAINE MINERALE A UN APPAREIL D'ENROULEMENT

(30) Priority: 29.11.2002 FI 20022106
(43) Date of publication of application: 21.09.2005
(73) Proprietor: Paroc Oy Ab, 01300 Vantaa (FI)
(72) Inventor: KARJALAINEN, Erkki, FIN-53650 Lappeenranta (FI); NIKKINEN, Matti, FIN-53500 Lappeenranta (FI)
(74) Representative: Haimelin, Jukka Ilmari
(86) International application number: PCT/FI2003/000741
(87) International publication number: WO 2004/050284

(56) References cited:
- US-A- 1 662 488
- US-A- 5 091 037
- US-A- 5 155 889

## Description

The present invention relates to a method and an apparatus for supplying a winding apparatus with mineral wool mat, in connection with manufacturing of insulation chutes from mineral wool.

Insulation chutes are manufactured in known methods in tubular form as parisons from mineral wool, the wool being usually in form of a web, which web is folded to a defined web width and thickness from the primary web coming from the manufacturing of the mineral wool. This folded web is usually rolled to storage rolls of a defined size, which storage rolls are then taken to the manufacturing apparatus of the insulation chutes as needed. In the manufacturing apparatus of the insulation chutes a winding web of a defined thickness in sawn from these storage rolls, which web is then fed to a winding device of the parisons. The sawing is performed at the rim of the roll as the roll rotates supported by a suitable apparatus. In view of the uninterrupted operation of the manufacturing machinery of the parisons, it is essential that the winding web can be fed to the winding apparatus essentially continuously. The problem in achieving the continuous operation is the time required for changing the storage rolls in the sawing apparatus.

The problem of the continuous operation caused by the change of the storage rolls is solved in the known art by cutting first a over-thick ply web from the storage roll. In a subsequent sawing step where the actual thickness of the web directed to the winding, the part that exceeds the thickness of the web actually required is cut from the ply web and directed aside to be wound as a supplement for future use into a supplemental roll in an appropriate device included in the apparatus. When the storage roll in the sawing stage is sawn to its end, the web directed to the winding is then sawn from the supplemental roll during the time that is required for changing the storage roll. An apparatus according to this kind of operation is disclosed, for example, in U.S. patent no. 5,155,889.

With this known arrangement is achieved a continuous feed of the web for winding as required by the operation of the winding apparatus. However, the mineral wool that is directed to the supplemental roll creates a problem in this arrangement. The mineral wool that is directed to the supplemental roll is forced to undergo multiple rolling and sawing treatments. The result of these treatments is a densification of the web, which may be significant, even to that extend that when manufacturing certain sizes of the parisons the density of the web coming from the supplemental roll into the winding is twice as high as the density of the web coming from the storage roll. Multiple sawing causes naturally also dust problems and shortening of the average fibre length, which adds to the densification of the web.

Another problem is related to the starting and ending stage of the sawing of the storage roll. The storage roll is rolled to a relative loose roll from the primary web without a rolling core, because of which the centre boss of the roll is located undeterminable in the roll, and on the other hand the roll is not exactly round and smooth at its rim. Even though the roll is rotated at its sawing point before the sawing is started in order to round the roll, there still remains indefiniteness in the roll due to the said reasons, which causes thickness changes and even holes at the starting end of the web sawn from the roll. These irregularities can be smoothed up to a certain point with the control of the sawing of the web taken from the supplemental roll. However, the wool compressed in the supplemental roll is not very suitable for smoothing the irregularities at the starting or ending end of the storage roll.

In the known art the winding web is also fed by unwinding it straight from the storage roll, but this operation comprises other disadvantages. In the first place, the layers of the web build-up to each other relatively firmly, which causes great difficulties at the unwinding of the roll layer by layer. The web going to the winding has unavoidably significant fluctuations of thickness.

A method in accordance with the current invention does not comprise the said problems, the characterizing features of the method being stated in the attached claim 1. The characterizing features of an apparatus useful for carrying out the method are defined in the attached claim 2.

Next, the invention is described in more detail with reference to the attached drawings, where
Figures 1a-1c shows an apparatus for carrying out the invention at different stages;
Figure 2 shows diagrammatically a cutting device of the apparatus and parts of the apparatus connected to it; and
Figure 3 shows a cross-section of a parison for an insulation chute, in which is established a coating at the inner side of the parison in accordance with the current invention.

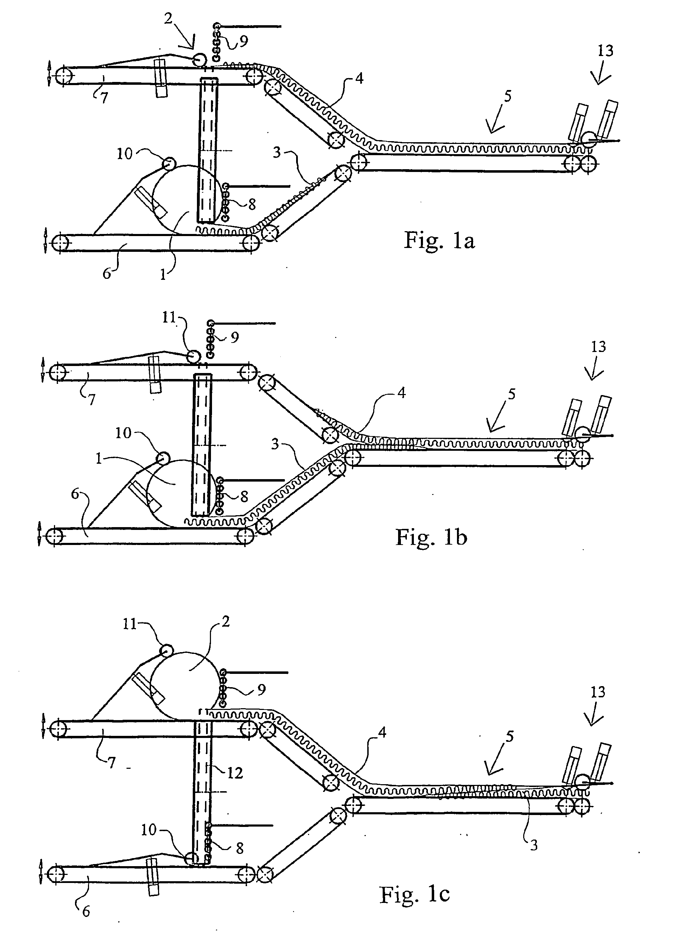

In figure 1 is described as an example the starting end of a manufacturing apparatus of parisons for insulation chutes, where a mineral wool web fed into the winding of parisons is created with operations in accordance with the current application. In the figures is shown two mineral wool storage rolls 1 and 2. The storage roll 2 located at the upper sawing station is at the operational stage of figure 1a about to run out. Sawing has been started a moment before from the storage roll 1 brought to the lower sawing station. Simultaneous sawing of the storage rolls 2 and 1 is carried out until the storage roll 2 has run out. During the simultaneous sawing the sawing stations are controlled so, that the thickness of the web 4 coming from the storage roll 2 gradually decreases and the thickness of the web 3 coming from the storage roll 1 correspondingly increases so, that a winding web 5 of a required thickness is created from the joined webs for feeding to the winding. When the storage roll 2 has ran out, the sawing continues wholly from the storage roll 1 as a web 3, the thickness of which web is then adjusted to the required thickness of the winding web 5. This operation is repeated and correspondingly controlled when the storage roll 1 has been sufficiently worn out in due time.

In the disclosed apparatus, the storage rolls 1 and 2 are placed on endless conveyors 6 and 7 moving in loop track, which conveyors simultaneously form a part of an apparatus used in rotating the rolls during the sawing. The conveyors 6 and 7 are advantageously belt conveyors, the width of the conveyors essentially equalling the width of the mineral wool web wound on storage rolls 1 and 2. The rotating apparatus of the sawing station comprises also support rollers 8 and 9, as well as a pressing rolls 10 and 11.

The sawing of the web (3 and 4) of defined thickness from the storage rolls 1 and 2 is carried out with a band-saw 12. The saw band of the band-saw is controlled to move as a loop, the horizontal parts of the loop moving near the top surfaces of the conveyors 6 and 7 and reach over the cross dimension of the conveyors. The vertical parts of the saw band loop move at the outer side of the width of the conveyors between the top surfaces of the conveyors, and the direction of the movement is from down to up in one sides of the conveyors and from up to down on the opposite sides of the conveyors. In the embodiment shown in the figure, the height position of the conveyors 6 and 7 is described as adjustable during the sawing. The band-saw is mounted as fixed, so the height position of the conveyors 6 and 7 defines the distance between the top surface of the conveyors and the saw band of the band-saw moving above it. This distance defines the thickness of the web 3 and 4, sawn from the storage rolls 1 and 2 respectively. The adjustment possibilities can also be achieved with combinations of the position adjustment movements of the saw and the conveyors.

In the place of the conveyors 6 and 7, and rollers 8, 9, 10, 11 can other apparatus combinations also be used for rotating the storage rolls 1 and 2, by which the roll can be kept rotating in place in relation to the saw 12.

When compared to the known state of the art, the method and the apparatus of the present invention allows the feeding of the mineral wool web of the desired thickness to a winding apparatus so, that the feeding is continuous in conformity with the requirements of the winding apparatus. The changing of the storage rolls does not cause any thickness variations of the web coming to the winding, whereby the quantity of the mineral wool actually fed to the winding can reliably be controlled by controlling the length of the web fed to the winding.

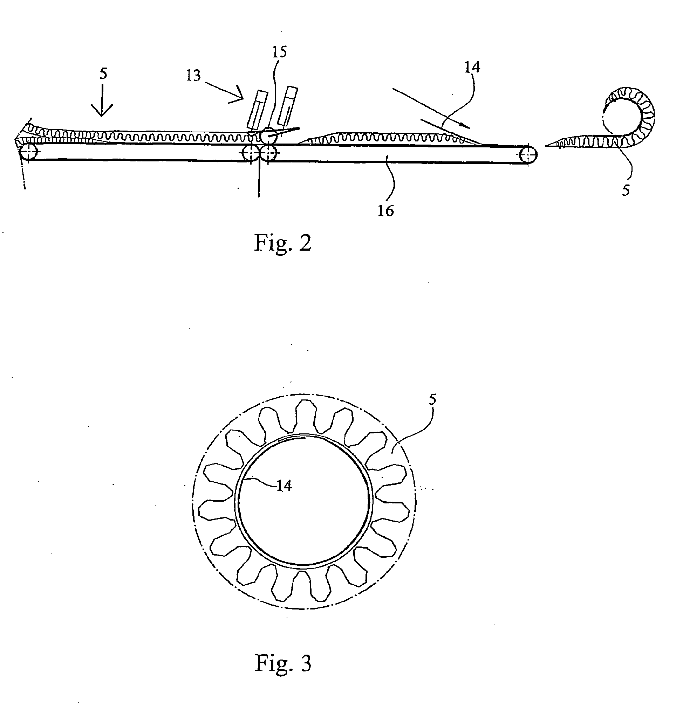

The current apparatus allows also a simple arrangement for a coating to be arranged on the surface of the central opening of the parisons. The coating can be added as a web of a suitable material onto the winding web 5, when foremost the coating fed to the inner surface of a parison is easily established due to the slanted starting web end created by a cutting device 13. The cutting device comprises in the shown embodiment of a braking roll 15, which is parallel to the turning roll of the conveyer 16 conveying the wool web to the winding. When the control of the apparatus notices a wool web of suitable length for winding of a parison on the conveyor 16, the previous conveyor is stopped and roll 15 is pushed against the upper surface of the conveyor so, that the wool web is caught between the roll and the conveyor. Thus, when the conveyor continues its advancement movement and the roll 15 is braking, the web is torn apart essentially slanted, as shown in figure 2.

## Claims

1. A method for feeding mineral wool web to a winding of parisons in a manufacturing apparatus of insulation chutes, in which method the web to be fed is sawn to a defined thickness from a storage roll made from a primary web, **characterized in that** the web is sawn as a continuous web in consecutive order from at least two, in respective order supplemented storage rolls, and the same sawing unit is used for sawing from each of the storage rolls.

2. An apparatus for carrying out the method in accordance with claim 1, which apparatus comprises a first device (6) for rotating a roll of wound mineral wool web and a saw (12) equipped with a blade moving in a loop track, which saw is located at tangential sawing contact with the roll (1) of wound mineral wool web, **characterized in that** the apparatus comprises a second rotating device (7), and that the saw (12) is also located at tangential sawing contact with a second roll (2) of wound mineral wool web in the second rotating device (2), and means for combining the webs actually sawn from the rolls of wound mineral wool as a web (5) directed to the winding.

3. An apparatus in accordance with claim 2, **characterized in that** the rotating devices for the rolls (1,2) of mineral wool consists of a conveyor (6; 7) moving in a loop track and means (8, 10; 9, 11) located in connection with the conveyor for locating and rotating the rolls of wound mineral wool on the moving conveyor.

4. An apparatus in accordance with claim 2 or 3, **characterized in that** the position of the rotating devices is adjustable in respect of the saw (12).

5. An apparatus in accordance with claim 2, 3, or 4, **characterized in that** the position of the saw (12) is adjustable in respect of the rotating devices.

6. An apparatus in accordance with any claim 2-5, **characterized in that** the apparatus has means for feeding a coating material web along with the winding web (5).

## Patentansprüche

1. Verfahren zum Zuführen einer Mineralwollbahn zum Wickeln von Rohlingen in einer Vorrichtung zur Herstellung von Rohrschalen, bei welchem die zuzuführende Bahn von einer, aus einer ursprünglichen Bahn hergestellten Vorratsrolle auf eine festgelegte Dicke gesägt wird, **dadurch gekennzeichnet, dass** die Bahn als kontinuierliche Bahn in aufeinander folgender Reihenfolge, von in entsprechender Reihenfolge ergänzten Vorratsrollen gesägt wird, und ein und dieselbe Sägeeinheit zum Sägen von jeder der Vorratsrollen verwendet wird.

2. Vorrichtung zur Durchführung des Verfahrens nach Anspruch 1, mit einer ersten Einrichtung (6) zum Drehen einer Rolle aus einer gewickelter Mineralwollbahn und mit einer Säge (12), deren Sägeblatt sich längs einer Schleifenbahn bewegt und die in tangentialem Sägekontakt mit der Rolle (1) aus gewickelter Mineralwollbahn angeordnet ist, **dadurch gekennzeichnet, dass** die Vorrichtung eine zweite Einrichtung (7) zum Drehen besitzt, wobei die Säge (12) auch in der zweiten Einrichtung zum Drehen in tangentialem Sägekontakt mit einer zweiten Rolle (2) aus gewickelter Mineralwollbahn angeordnet ist, und die Vorrichtung Mittel zum Vereinigen der tatsächlich von den Rollen aus gewickelter Mineralwolle gesägten Bahnen zu einer Bahn (5), die zu dem Wickeln gerichtet ist, besitzt.

3. Vorrichtung nach Anspruch 2, **dadurch gekennzeichnet, dass** die Einrichtungen zum Drehen der Rollen (1, 2) aus Mineralwolle aus einem sich in einer Schleifenbahn bewegenden Förderer (6;7) und Mitteln (8, 10; 9, 11) bestehen, die in Verbindung mit dem Förderer angeordnet sind, um die Rollen aus gewickelter Mineralwolle zu positionieren und zu drehen.

4. Vorrichtung nach Anspruch 2 oder 3, **dadurch gekennzeichnet, dass** die Position der Einrichtungen zum Drehen bezüglich der Säge (12) einstellbar ist.

5. Vorrichtung nach Anspruch 2, 3 oder 4, **dadurch gekennzeichnet, dass** die Position der Säge (12) bezüglich der Einrichtungen zum Drehen einstellbar ist.

6. Vorrichtung nach einem der Ansprüche 2 bis 5, **dadurch gekennzeichnet, dass** sie Mittel zum Zuführen einer Bahn aus Beschichtungsmaterial zusammen mit der Wickelbahn (5) besitzt.

## Revendications

1. Procédé d'alimentation d'une bande de laine minérale sur un enroulement d'ébauches dans un dispositif de fabrication de goulottes isolantes, procédé dans lequel la bande à délivrer est sciée à une épaisseur définie à partir d'un rouleau de stockage formé à partir d'une bande primaire, **caractérisé en ce que** la bande est sciée sous la forme d'une bande continue en ordre consécutif à partir d'au moins deux rouleaux de stockage ajoutés en ordre respectif, et la même unité de sciage est utilisée afin de scier à partir de chacun des rouleaux de stockage.

2. Dispositif destiné à mettre en oeuvre le procédé selon la revendication 1, lequel dispositif comprend un premier dispositif (6) destiné à entraîner en rotation un rouleau de bande de laine minérale enroulée et une scie (12) équipée d'une lame se déplaçant sur une piste en boucle, laquelle scie est située en contact de sciage tangentiel avec le rouleau (1) de bande de laine minérale enroulée, **caractérisé en ce que** le dispositif comprend un second dispositif d'entraînement en rotation (7), et **en ce que** la scie (12) est aussi située en contact de sciage tangentiel avec un second rouleau (2) de bande de laine minérale enroulée sur le second dispositif d'entraînement en rotation (2), et des moyens destinés à associer les bandes réellement sciées à partir des rouleaux de laine minérale enroulée sous la forme d'une bande (5) dirigé vers l'enroulement.

3. Dispositif selon la revendication 2, **caractérisé en ce que** les dispositifs d'entraînement en rotation des rouleaux (1, 2) de laine minérale sont constitués par un convoyeur (6 ; 7) se déplaçant sur une piste en boucle et des moyens (8, 10 ; 9, 11) situés en relation avec le convoyeur afin d'assurer le positionnement et la rotation des rouleaux de laine minérale enroulée sur le convoyeur mobile.

4. Dispositif selon la revendication 2 ou 3, **caractérisé en ce que** la position des dispositifs d'entraînement en rotation peut être ajustée par rapport à la scie (12).

5. Dispositif selon la revendication 2, 3 ou 4, **caractérisé en ce que** la position de la scie (12) peut être ajustée par rapport aux dispositifs d'entraînement en rotation.

6. Dispositif selon l'une quelconque des revendications 2 à 5, **caractérisé en ce que** le dispositif comporte des moyens destinés à délivrer une bande de matériau de revêtement simultanément à la bande d'enroulement (5).
